# EUROPÄISCHE PATENTSCHRIFT

(11) **EP 3 437 911 B1**
(45) Veröffentlichungstag und Bekanntmachung des Hinweises auf die Patenterteilung: **29.01.2020**
(21) Anmeldenummer: 17184682.7
(22) Anmeldetag: 03.08.2017
(51) Int. Cl.: B60K 15/04, B60K 15/05

(54) **LADE- ODER TANKMULDE**
LOADING OR FUEL INLET COMPARTMENT
BERCEAU DE CHARGEMENT ET COMPARTIMENT D'ENTRÉE DE RÉSERVOIR

(43) Veröffentlichungstag der Anmeldung: 06.02.2019
(73) Patentinhaber: Dr. Schneider Kunststoffwerke GmbH, 96317 Kronach-Neuses (DE)
(72) Erfinder: Endres, Gerhard, 95336 Mainleus (DE); Grüdl, Alexander, 96358 Teuschnitz (DE); Fischer, Markus, 96215 Lichtenfels (DE); Herpich, Conny, 96346 Wallenfels (DE); Büttner, Martin, 96337 Ludwigsstadt (DE); Grünbeck, Holger, 96264 Altenkunstadt (DE)

(56) Entgegenhaltungen:
- DE-A1-102013 214 205
- DE-A1-102014 115 907
- DE-T2- 69 201 552

## Beschreibung

Es wird eine Lade- oder Tankmulde zum Einsetzen in eine Karosserieöffnung eines Kraftfahrzeugs mit einem Muldenkörper, der eine Durchgangsöffnung aufweist, in die ein Ladesteckverbinder oder ein Tankeinfüllrohr einsetzbar ist, und einem an der Durchgangsöffnung angeordneten Dichtring beschrieben.

### Stand der Technik

Eine Lade- oder Tankmulde dient zur Aufnahme und Halterung eines Ladesteckverbinders oder eines Tankeinfüllrohrs, über welche ein Laden eines Energiespeichers oder ein Befüllen eines Kraftstofftanks erfolgen. Die Lade- oder Tankmulde ist im Bereich einer Tank- oder Ladeöffnung einer Karosserie angeordnet und kann über einen Hebelarm, der einen Deckel oder eine Blende aufweist, freigelegt werden. Nach dem Öffnen kann ein Laden oder Betanken eines Kraftfahrzeugs durchgeführt werden.

In letzter Zeit sind vermehrt Fahrzeuge bereitgestellt worden, die zusätzlich zu einer herkömmlichen Betankung über einen Kraftstoff mit elektrischem Strom geladen werden können. Ferner sind Fahrzeuge bekannt, die rein elektrisch betrieben werden können. Sowohl bei konventionellen Fahrzeugen, die mit Kraftstoff betrieben werden, als auch Hybridfahrzeugen, die sowohl mit Kraftstoff betankt als auch mit elektrischer Energie versorgt werden, und rein elektrisch betriebenen Fahrzeugen sind sogenannte Lade- oder Tankmulden vorgesehen. Um vor allem bei Tanksystemen ohne einen separaten Verschluss, der zusätzlich zu einer Verschlussklappe vorgesehen ist, das Eindringen von Verunreinigungen und Feuchtigkeit zu verhindern, werden hohe Anforderungen an eine dafür erforderliche Dichtung gestellt.

Dichtungen sind daher ein wichtiger Bestandteil bei Lade- oder Tankmulden für die Abdichtung eines Ladesteckverbinders und/oder eines Tankeinfüllrohrs, damit beispielsweise keine Feuchtigkeit zu einem Ladesteckverbinder gelangt. Ferner soll verhindert werden, dass Feuchtigkeit in ein Tankeinfüllrohr gelangen kann oder Kraftstoff aus einem Tankeinfüllrohr bzw. Kraftstoffdämpfe austreten.

Eine Lade- oder Tankmulde, die eine Abdichtung bereitstellt ist beispielsweise aus DE 10 2014 104 501 A1 bekannt. Diese Lade- oder Tankmulde weist einen Dichtring mit einem ringförmigen Dichtkörper auf, von dem ausgehend sich eine erste elastische Dichtlippe und eine zweite elastische Dichtlippe erstrecken, wobei die erste Dichtlippe dazu ausgebildet ist, an einem in die Durchgangsöffnung eingesetzten Ladesteckverbinder oder Tankeinfüllrohr anzuliegen, und wobei die zweite Dichtlippe dazu ausgebildet ist, an einer die Tank- oder Lademulde verschließenden Verschlussklappe anzuliegen.

Die Lade- oder Tankmulde aus dem Stand der Technik weist zwei Dichtlippen auf, die sich in verschiedene Richtungen erstrecken. Die Ausbildung einer solchen Dichtung stellt daher hohe Anforderungen an die Fertigung. Dementsprechend ist diese Dichtung relativ teuer in der Herstellung. Ferner wird ein Abdichten lediglich in einer Richtung erreicht. Dies bedeutet, dass die einzelnen Dichtlippen keinen positiven Effekt aufeinander ausüben.

Die DE 10 2013 214 205 A1 offenbart eine Lade- oder Tankmulde für ein Kraftfahrzeug. An der Innenseite der Verschlussklappe ist eine Abdeckplatte für eine Ladedose angebracht, die in geschlossener Position der Verschlussklappe die Ladedose abdeckt. Die Ladedose ist in einem Hohlkörper im Muldenkörper der Lade- oder Tankmulde angeordnet. An der Abdeckung ist eine Dichtung angebracht, damit bei geschlossener Verschlussklappe die Ladedose vor Feuchtigkeit und Verschmutzung geschützt ist. Zudem ist am Muldenkörper eine weitere Dichtung angebracht, die den Muldenkörper zu den angrenzenden Karosseriebauteilen abdichtet. Auch zum Hohlkörper hin ist eine Dichtung an dem Muldenkörper angebracht, die den Hohlkörper gegenüber dem Muldenkörper umlaufend abdichtet. Die Lade- oder Tankmulde aus DE 10 2013 214 205 A1 weist folglich drei Einzeldichtungen auf.

### Aufgabe

Es ist daher Aufgabe, eine Lade- oder Tankmulde anzugeben, die zum Einsetzen in eine Karosserieöffnung eines Kraftfahrzeugs ausgebildet ist und einen Muldenkörper, der eine Durchgangsöffnung aufweist, in die Ladesteckverbinder oder ein Tankeinfüllrohr einsetzbar ist, und einen an der Durchgangsöffnung angeordneten Dichtring aufweist, wobei der Dichtring einfach ausgebildet ist. Zudem soll eine Alternative zu Dichtungen aus dem Stand der Technik angeben werden, die keine komplexe, mehrteilige Ausbildung von Dichtlippen erfordert.

### Lösung

Die vorstehend genannte Aufgabe wird durch eine Lade- oder Tankmulde nach Anspruch 1 gelöst.

Der Dichtring weist nur eine einzige elastische Dichtlippe auf, welche sowohl eine Abdichtung gegenüber einem Ladesteckverbinder oder Tankeinfüllrohr als auch eine Abdichtung gegenüber einer Verschlussklappe bereitstellt. Vorteilhafterweise ergibt sich durch die Krümmung der elastischen Dichtlippe nicht nur ein Anliegen eines entsprechenden Abschnitts an einer ersten abzudichtenden Komponente sondern auch ein erhöhter Druck auf die weitere abzudichtende Komponente durch den weiteren Abschnitt der Dichtlippe. Beim Schließen der Verschlussklappe werden die Abschnitte der Dichtlippe entsprechend stärker gegen die abzudichtenden Komponenten gepresst. Im Stand der Technik erfolgt in der Regel lediglich ein Anlegen der Dichtlippe an jeweils einer Komponente. Zudem sind im Stand der Technik mindestens zwei Dichtlippen erforderlich, die separat an einem Dichtring angeordnet sind. Die hierin beschriebene Ausbildung des Dichtrings mit einem ringförmigen Dichtkörper und einer sich vom ringförmigen Dichtkörper erstreckenden elastischen Dichtlippe, wobei die Dichtlippe eine Krümmung aufweist, vereinfacht den Aufbau der Dichtung und damit auch die Lade- oder Tankmulde und stellt eine Sicherung mit einer hohen Anpresskraft bereit. Dichtungen unterliegen einem Alterungsprozess, der häufig dazu führt, dass die Dichtung nicht mehr bündig abschließt. Daher kann es zu einem Eintritt von Verunreinigungen und Flüssigkeiten (z.B. Regenwasser) sowie zu einem Austritt von Gasen kommen. Dadurch, dass die Dichtung bzw. die elastische Dichtlippe im verschlossenen Zustand der Lade- oder Tankmulde geringfügig verformt wird, ergibt sich eine höhere Anpresskraft als bei bekannten Dichtungen aus dem Stand der Technik. Zudem wird nicht nur eine feste Anlage an dem Abschnitt erreicht, an welchem beispielsweise die Verschlussklappe anliegt, sondern durch das Anpressen der Verschlussklappe an den zweiten Abschnitt die Anpresskraft auf den ersten Abschnitt erhöht.

Ferner erfolgt über den umlaufenden Dichtkörper eine dichte Anbindung zwischen dem Muldenkörper und einem Ladesteckverbinder und/oder einem Tankeinfüllrohr. Der hierin beschriebene Dichtring stellt mit seiner einfachen Ausbildung eine Abdichtung gegenüber einem Ladesteckverbinder und/oder einem Tankeinfüllrohr, einer Verschlussklappe und dem Muldenkörper bereit.

Die Dichtlippe kann eine im Wesentlichen U-förmige, G-förmige oder sichelförmige Querschnittsform aufweisen. Die Ausgestaltung der Querschnittsform hängt unter anderem davon ab, wie die Lade- oder Tankmulde ausgebildet ist und beispielsweise welche Form die Verschlussklappe oder daran angeordnete Verschlusselemente aufweisen. Darüber hinaus ist die Querschnittsform auch abhängig davon, welcher Werkstoff verwendet wird und welche Abmaße die Dichtung bzw. die elastische Dichtlippe aufweisen. Ein Vorteil ergibt sich durch die vorstehend genannten Querschnittformen auch hinsichtlich dem Abführen von eintretender Flüssigkeit. Beispielsweise kann die Krümmung der elastischen Dichtlippe derart gewählt sein, dass eintretende Flüssigkeit in einer Rinne, gebildet durch die gekrümmte Dichtlippe, sich sammelt, wobei die Flüssigkeit über die Rinne schwerkraftbedingt zu einem unteren Bereich läuft und anschließend von der Rinne aus einem Spalt zwischen der Karosserieöffnung und Verschlussklappe austritt.

Die Dichtlippe kann ferner derart ausgebildet sein, dass der erste Abschnitt und der zweite Abschnitt sich gegenüberliegen. In einer solchen Ausführungsform wird auf einfache Art und Weise beim Schließen der Verschlussklappe durch Druck auf den zweiten Abschnitt automatisch ein Druck auf den ersten Abschnitt erzeugt, der höher ist als ein Druck bzw. die Anpresskraft auf den Ladesteckverbinder oder ein Tankeinfüllrohr im nicht geschlossenen Zustand der Lade- oder Tankmulde.

Weiterhin kann die Erstreckung der Dichtlippe zwischen dem ersten Abschnitt und dem zweiten Abschnitt größer sein als eine Erstreckung zwischen dem ringförmigen Dichtkörper und einem dem ringförmigen Dichtkörper gegenüberliegenden, den ersten Abschnitt und den zweiten Abschnitt miteinander verbindenden Abschnitt der Dichtlippe. In einer solchen Ausführungsform kann ein Ausbrechen des verbindenden Abschnitts verhindert oder minimiert werden, wobei die Anpresskraft im Wesentlichen von dem zweiten Abschnitt auf den ersten Abschnitt übertragen wird.

In weiteren Ausführungen kann sich die Dichtlippe im Bereich unter oder über einer durch die Durchgangsöffnung definierten Ebene erstrecken und ein Endabschnitt der Dichtlippe entsprechend unterhalb oder oberhalb dieser Ebene enden. In einer solchen Ausführungsform benötigt die elastische Dichtlippe wenig Bauraum und die Dichtung ist insgesamt kleiner ausgebildet. In einer solchen Ausführungsform können der erste Abschnitt und der zweite Abschnitt beispielsweise im Wesentlichen um 45° versetzt zueinander ausgerichtet sein. Ein Druck auf den zweiten Abschnitt kann dabei beispielsweise seitlich erfolgen, wenn die Verschlussklappe gegen den zweiten Abschnitt drückt, wobei zusätzlich eine erhöhte Anpresskraft auf den ersten Abschnitt wirkt.

Die Verschlussklappe kann einen kegelstumpfartigen Abschnitt aufweisen und der zweite Abschnitt der Dichtlippe im verschlossenen Zustand der Verschlussklappe an der Mantelfläche des kegelstumpfartigen Abschnitts anliegen. Beim Schließen der Verschlussklappe drückt die Mantelfläche des kegelstumpfartigen Abschnitts den zweiten Abschnitt stetig weiter nach außen, d. h. dem Rand der Durchtrittsöffnung zugewandt, wobei zusätzlich der Druck auf den ersten Abschnitt zunimmt. Die Ausbildung eines kegelstumpfartigen Abschnitts an der Verschlussklappe eignet sich beispielsweise für die Ausführung einer Dichtlippe, welche sich im Bereich unter oder über einer durch die Durchgangsöffnung definierten Ebene erstreckt.

Der ringförmige Dichtkörper kann schwimmend in der Durchgangsöffnung gelagert oder mit einem die Durchgangsöffnung umgebenden Rand verbunden sein. Eine Verbindung kann beispielsweise über ein Zweikomponentenspritzgussverfahren, ein Ankleben oder ein Verklemmen erfolgen. Darüber hinaus kann beispielsweise ein Ultraschallschweißen oder eine Verbindung durch ein Einklemmen in einen entsprechend ausgebildeten Rand mit einer umlaufenden Aufnahmenut erfolgen. In weiteren Ausführungsformen kann auch der Dichtring den Rand umgreifen.

Der Dichtring kann vorzugsweise aus einem hitzebeständigen Kunststoff bestehen, sodass die Dichtung auch beispielsweise durch hohe Ladeströme und dadurch hohe Temperaturen nicht beschädigt wird.

Weiterhin kann die Dichtlippe derart angeordnet sein, dass ein Bereich zwischen dem ringförmigen Dichtkörper und einem Endabschnitt der Dichtlippe eine umlaufende, nach außen ragende Öffnung bereitstellt. In einer solchen Ausführungsform kann die Rinne, welche sich durch die Querschnittsform und die Krümmung der Dichtlippe ergibt, einem gedachten Fahrzeugraum zugewandt sein. Der Eintritt von Verunreinigungen und Flüssigkeiten von außen über einen umlaufenden Schlitz an der Verschlussklappe wird über den zweiten Abschnitt sichergestellt, der an der Verschlussklappe anliegt.

In weiteren Ausführungsformen ist an der Dichtlippe mindestens ein Ring angeordnet. Bspw. kann ein Ring an einem Endabschnitt der Dichtlippe angeordnet sein und sowohl zur Beibehaltung der Struktur des Rings als auch als Dichtelement dienen. Der mindestens eine Ring kann ferner zu beiden Seiten der Dichtlippe angeordnet sein. In Ausführungen mit mehreren Ringen können diese auch an der Innenseite und der Außenseite der Dichtlippe angeordnet sein. Der mindestens eine Ring ermöglicht die Beibehaltung und Ausbildung des Querschnitts der Dichtlippe, ohne dass das Einnehmen einer gestreckten Position der Dichtlippe möglich wäre. Über einen Ring kann daher die Dichtlippe einfach ausgebildet werden, ohne dass aufwendige Herstellungsschritte durchgeführt werden müssen. Der Ring kann ferner auch eine elastisch ausgebildet sein, sodass beim Schließen der Verschlussklappe der Durchmesser des Rings vergrößert werden kann, um ein entsprechendes Anliegen bzw. eine Übertragung der Anpresskräfte zu erreichen.

In noch weiteren Ausführungsformen weist die Dichtlippe eine geschlossene Form auf. Die Dichtlippe weist in solchen Ausführungen keinen Endabschnitt auf, der frei liegt. Der Dichtring kann mit einem Profil in einem Extrusionsverfahren hergestellt werden. Von einem langgestreckten Dichtelement werden dann Stücke abgeschnitten, die zu einem kreisförmigen Objekt zusammengefügt und dauerhaft miteinander verbunden werden. Dies kann bspw. über ein Verkleben oder über ein Verschweißen erfolgen. Der Dichtkörper zur Befestigung an einem Rand der Durchgangsöffnung kann in weiteren Ausführungen eingekedert sein. Die Vorteile von solchen Ausführungen liegen in der einfachen und kostengünstigen Herstellung von Dichtringen.

Weiterhin können in geschlossenen Dichtlippen Gase aufgenommen sein, welche insbesondere bei dünnwandigen Dichtlippen einer Verformung durch Anlage an der Verschlussklappe und einem Ladesteckverbinder oder Tankeinfüllrohr entgegenwirken. In weiteren Ausführungen können anstelle von Gasen auch andere Fluide, wie Flüssigkeiten aufgenommen sein. Die Flüssigkeiten können bspw. auch zähflüssig sein und entsprechend ihrer Materialeigenschaften an den Verwendungszweck angepasst sein. Die Anpassung kann bspw. hinsichtlich der Temperaturen, welchen die Fluide ausgesetzt sind, einer Konzentration und Zusammensetzung der umgebenden Komponenten und Gase sowie der auf die Dichtlippe wirkenden Kräfte erfolgen.

In weiteren Ausführungen kann eine geschlossene Form einer Dichtlippe auch in einem Spritzgussprozess erzeugt werden.

In noch weiteren Ausführungsformen kann die Dichtlippe in mindestens einem Bereich mindestens eine Einschnürung aufweisen. Die Einschnürung kann sowohl bei Ausführungen mit einer geschlossenen Form der Dichtlippe als auch bei Ausführungen mit einem freiliegenden Endabschnitt vorgesehen sein. Die Anzahl der Einschnürungen kann nach Maßgabe der Ausbildung der Dichtlippe hinsichtlich ihrer Form, Größe und Beschaffenheit sowie der Ausbildung der damit in Kontakt tretenden Bauteile bestimmt werden.

Eine Einschnürung kann eine definierte Knickstelle bereitstellen. Es kann über Einschnürungen damit gezielt festgelegt werden, an welcher Stelle oder an welchen Stellen der Dichtring nachgibt. Hierüber lässt sich auch eine definierte Federung einstellen. Einschnürungen können bspw. durch Bereiche mit einem Einschnitt oder einer geringeren Wandstärke gebildet werden.

Einschnürungen können zudem verhindern, dass ein "Einknicken" der Dichtlippe an anderen oder wechselnden Bereichen erfolgt, was zu einer Beschädigung und schließlich zu einer Zerstörung der Dichtlippe führen kann.

Der Muldenkörper kann beispielsweise aus Kunststoff gefertigt sein und ist daher in einem Spritzgussprozess in hoher Stückzahl kostengünstig herzustellen. Die Dichtung kann in einem Zweikomponentenspritzgussverfahren an den Rand der Durchgangsöffnung angespritzt werden, wobei über den ringförmigen Dichtkörper eine zusätzliche Abdichtung gegenüber einem Fahrzeuginnenraum erreicht wird.

### Kurzbeschreibung der Figuren

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung eines Muldenkörpers einer Tankmulde;
- Fig. 2: eine schematische Schnittansicht durch eine Lademulde einer ersten Ausführungsform;
- Fig. 3: eine schematische Schnittansicht durch eine Lademulde einer zweiten Ausführungsform;
- Fig. 4: eine schematische Schnittansicht durch eine Lademulde einer dritten Ausführungsform;
- Fig. 5: eine schematische Schnittansicht durch eine Lademulde einer vierten Ausführungsform;
- Fig. 6: eine schematische Schnittansicht durch eine Lademulde einer fünften Ausführungsform;
- Fig. 7: eine schematische Schnittansicht durch eine Lademulde einer sechsten Ausführungsform;
- Fig. 8: eine schematische Schnittansicht durch eine Lademulde einer siebten Ausführungsform; und
- Fig. 9: eine schematische Schnittansicht durch eine Lademulde einer achten Ausführungsform.

In den Zeichnungen mit gleichen Bezugszeichen versehene Komponenten entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind.

### Ausführliche Beschreibung von Ausführungsbeispielen

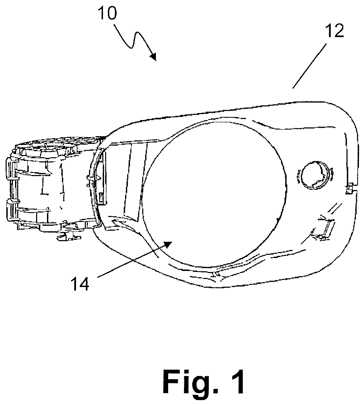

Fig. 1 zeigt eine perspektivische Darstellung eines Muldenkörpers 12 einer Lademulde 10. Der Muldenkörper 12 besteht aus Kunststoff und weist eine mittige Durchgangsöffnung 14 auf, in welcher ein Ladesteckverbinder 50 oder ein Tankeinfüllrohr einsetzbar sind. Der Muldenkörper 12 weist ferner auf der linken Seite einen Abschnitt auf, der zur schwenkbaren Lagerung eines Hebelarms dient. Der Hebelarm ist mit einer Verschlussklappe 18 verbunden. Zusätzlich können noch Verriegelungs- und Stelleinrichtungen vorgesehen sein, die ein Öffnen und Schließen ausführen, unterstützen oder bestimmte Positionen der Verschlussklappe 18 (Verriegelung) sicherstellen.

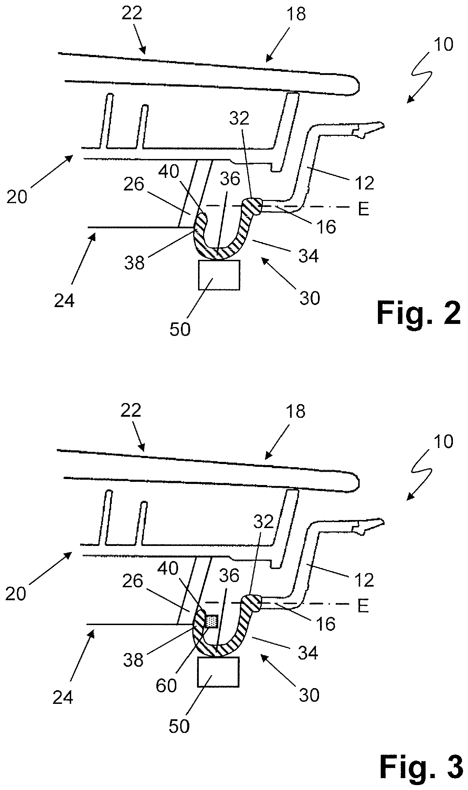

Fig. 2 zeigt eine schematische Schnittansicht durch eine Lademulde 10 einer ersten Ausführungsform. Die Tankmulde 10 weist einen Muldenkörper 12 auf, der hier nur teilweise dargestellt ist. An einem Rand 16, der die Durchgangsöffnung 14 umgibt, ist ein Dichtring 30 angeordnet. Der Dichtring 30 weist einen ringförmigen Dichtkörper 32 auf, der mit dem Rand 16 verbunden ist. Von dem ringförmigen Dichtkörper 32 erstreckt sich eine elastische Dichtlippe 34 die gekrümmt ausgebildet ist. Bei der ersten gezeigten Ausführungsform weist die Dichtlippe 34 eine im Wesentlichen U-förmige Querschnittsform auf. Ein erster Abschnitt 36 der Dichtlippe 34 liegt an einem Ladesteckverbinder 50 an, der in Fig. 2 schematisch dargestellt ist. Ein zweiter Abschnitt 38, der sich kurz vor einem Endabschnitt 40 der Dichtlippe 34 befindet, liegt an einem kegelstumpfartigen Abschnitt 24 an.

Der kegelstumpfartige Abschnitt 24 ist an der Unterseite einer Verschlussklappe 18 an dessen Tragstruktur 20 angeordnet. Die Tragstruktur 20 ist Teil eines Hebelarms, welcher verschwenkbar mit dem Muldenkörper 12 verbunden ist. An der Tragstruktur 20 ist eine Abdeckung angeordnet. Die Abdeckung 22 überspannt die Mulde der Lademulde 10 bzw. des Muldenkörpers 12, wobei eine Abdichtung zwischen der Verschlussklappe 18 und dem Innenraum bzw. der Durchgangsöffnung 14 über den zweiten Abschnitt 38 erfolgt. Der zweite Abschnitt 38 liegt hierbei an einer Wand 26 des kegelstumpfartigen Abschnitts 24 an.

An der Außenseite 22 kann zusätzlich eine weitere Dekorschicht oder eine zusätzliche Abdeckung an der Verschlussklappe 18 vorgesehen sein.

In der ersten Ausführungsform ist der Dichtring 30 so ausgebildet, dass die Dichtlippe 34 unterhalb einer durch die Durchgangsöffnung 14 verlaufenden Ebene E liegt. Im geschlossenen Zustand, der in Fig. 2 gezeigt ist, drückt die Wand 26 den zweiten Abschnitt 38 nach außen und bewirkt zusätzlich aufgrund der kegelstumpfartigen Ausbildung einen Druck auf den ersten Abschnitt 36. Der Dichtring 30 ermöglicht daher zusätzlich zu einer regulären Abdichtung aufgrund der Anlage des ersten Abschnitts 36, des zweiten Abschnitts 38 sowie der Anlage bzw. Verbindung des Dichtkörpers 32 an dem Rand 16, eine erhöhte Anpresskraft im verschlossenen Zustand der Lademulde 10 auf den ersten Abschnitt 36 und den zweiten Abschnitt 38. Der Druck durch die Wand 26 auf den zweiten Abschnitt 38 erhöht nicht nur die Anpresskraft und damit die Dichtung in diesem Abschnitt sondern erhöht auch den Druck auf den ersten Abschnitt 36. Im Stand der Technik wurde bisher nur durch Druck von einer Komponente auf eine entsprechende Dichtung eine Anpresskraft erzeugt, die zwischen diesen beiden Komponenten (Komponente 1 und Dichtung) wirkt. Die Übertragung der Anpresskraft aufgrund des Kontakts zwischen einer ersten Komponente und einer Dichtung auf einen weiteren Abschnitt der Dichtung und eine zweite Komponente sind aus dem Stand der Technik nicht bekannt. Ferner bewirkt die hierin gezeigte gekrümmte Ausbildung der Dichtlippe 34 eine definierte Kraftübertragung mit einer erhöhten Anpresskraft im verschlossenen Zustand.

Im geöffneten Zustand der Lademulde 10 können der zweite Abschnitt 38 und der Endabschnitt 40 weiter in die Mitte der Durchgangsöffnung 14 ragen. Beim Schließen der Verschlussklappe 18 werden durch die kegelstumpfartige Ausbildung der Wand 26 der Endabschnitt 40 und der zweite Abschnitt 38 schrittweise nach außen gedrückt. Hierdurch wird eine sichere Anlage des zweiten Abschnitts 38 an einem Bereich der Wand 26 erreicht. Zusätzlich ergibt sich dabei eine erhöhte Anpresskraft des ersten Abschnitts 36.

Der Dichtring 30 ist über den ringförmigen Dichtkörper 32 umlaufend mit dem Rand 16 der Durchgangsöffnung 14 verbunden.

In den Figuren ist jeweils nur eine schematische Schnittansicht des Dichtrings 30 dargestellt. Jedoch ist offensichtlich, dass der Dichtring 30 eine ringförmige Ausgestaltung aufweist um die Durchgangsöffnung 14 abzudichten sowie eine Abdichtung über die Dichtlippe 34 im ersten Abschnitt 36 und im zweiten Abschnitt 38 bereitzustellen.

Der Kunststoff des Dichtrings 30 kann insbesondere hitzebeständig ausgeführt sein, sodass auch durch hohe Temperaturen, welche aufgrund von Ladevorgängen bei elektrischen Energieversorgungssystemen auftreten, nicht beschädigt wird und die Dichtung über einen langen Einsatzzeitraum ihre dichtende Funktion bereitstellt.

Der Muldenkörper 12 besteht aus Kunststoff. Auch die Tragstruktur 20 sowie eine Abdeckung können aus Kunststoff bestehen. Ist über die Durchgangsöffnung 14 zusätzlich oder alternativ ein Tankeinfüllrohr einsetzbar, kann ein Kunststoff für die Verschlussklappe 18 und für den Muldenkörper 12 Zusätze aufweisen, welche den Austritt von Kraftstoffdämpfen behindern.

Der Dichtring 30 von Fig. 2 ist ferner so ausgebildet, dass eine umlaufende Rinne bereitgestellt wird. Eintretende Feuchtigkeit wird daher über die Rinne gehalten und kann nicht in einem Bereich eintreten, in dem sich der Ladesteckverbinder 50 befindet.

Fig. 3 zeigt eine schematische Schnittansicht durch eine Lademulde 10 einer zweiten Ausführungsform. Die zweite Ausführungsform unterscheidet sich von der ersten Ausführungsform dadurch, dass zusätzlich ein Ring 60 im Bereich des Endabschnitts 40 angeordnet ist. Der Ring 60 ist elastisch ausgebildet, sodass dieser bei der Verlagerung des Endabschnitts 40 nach außen durch die Wand 26 in entsprechender Weise gedehnt werden kann. Es erfolgt damit eine Vergrößerung des Durchmessers des Rings 60. Der Ring 60 ist in erster Linie dafür vorgesehen, die Ausbildung der Krümmung der Dichtlippe 34 zu unterstützen. Durch den Ring 60 kann die Querschnittsform der Dichtlippe 34 beibehalten werden, ohne dass es zu einem Zurückspringen in eine im Wesentlichen ebene Form oder eine anderweitige Verformung kommt. In weiteren Ausführungsformen können auch mehrere Ringe 60 vorgesehen sein, wobei diese beispielsweise nicht alle elastisch sein müssen.

In einer Abwandlung der zweiten Ausführungsform, die in den Figuren nicht gezeigt ist, befindet sich der Ring 60 auf der gegenüberliegenden Seite des Endabschnitts 40, sodass der zweite Abschnitt 38 über einen Ring 60 an der Wand 26 anliegt. Der Ring 60 dient in einer solchen Ausführungsform zusätzlich als Dichtring.

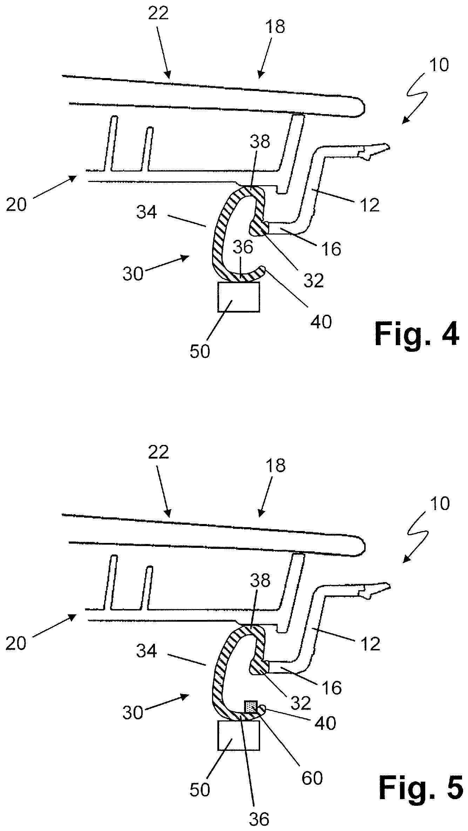

Fig. 4 zeigt eine schematische Schnittansicht durch eine Lademulde 10 einer dritten Ausführungsform. Die Lademulde 10 der dritten Ausführungsform unterscheidet sich von der Lademulde 10 der ersten Ausführungsform durch die Ausbildung des Dichtrings 30. In der dritten Ausführungsform weist die Dichtlippe 34 eine im Wesentlichen sichelförmige oder auf den Kopf gestellte G-förmige Querschnittsform auf. Zudem liegen sich der erste Abschnitt 36 und der zweite Abschnitt 38 gegenüber und der Abstand zwischen dem ersten Abschnitt 36 und dem zweiten Abschnitt 38 ist größer als der Abstand des Dichtrings 30 zwischen dem ringförmigen Dichtkörper 32 und einem gegenüberliegenden Abschnitt, der den ersten Abschnitt 36 mit dem zweiten Abschnitt 38 verbindet.

In der dritten Ausführungsform ist an der Tragstruktur 20 kein kegelstumpfartiger Abschnitt 24 angeordnet. Der zweite Abschnitt 38 liegt dabei direkt an der Tragstruktur 20 im verschlossenen Zustand der Lademulde 10 an. Wird die Lademulde 10 verschlossen und die Verschlussklappe 18 nach unten gedrückt, wird neben der Anpresskraft im zweiten Abschnitt 38 und dem gegenüberliegenden Kontaktbereich der Tragstruktur 20 ein erhöhter Druck auf den ersten Abschnitt 36 ausgeübt. Die Anpresskraft über den ersten Abschnitt 36 auf den Ladesteckverbinder 50 ist in der dritten Ausführungsform im geschlossenen Zustand daher größer als in einem nicht verschlossenem Zustand.

Fig. 5 zeigt eine schematische Schnittansicht durch eine Lademulde 10 einer vierten Ausführungsform. Die vierte Ausführungsform unterscheidet sich von der dritten Ausführungsform dadurch, dass im Bereich des Endabschnitts 40 ein Ring 60 angeordnet ist. Der Ring 60 ist mit der Dichtlippe 34 verbunden und bewirkt die Beibehaltung dessen Querschnittsform. Zusätzlich können, wie bereits für die zweite Ausführungsform angegeben, auch mehrere Ringe 60 vorgesehen sein, welche nicht alle elastische Eigenschaften aufweisen müssen. Beispielsweise kann der Ring 60 der vierten Ausführungsform nicht elastisch ausgebildet sein. Bei einer solchen Ausführungsform erfolgt kein Stauchen oder Dehnen des Rings 60. Wie bereits für die zweite Ausführungsform beschrieben, kann der Ring 60 auch auf der gegenüberliegenden Seite an dem Endabschnitt 40 angeordnet sein. In einer solchen Ausführung dient der Ring 60 zusätzlich als Dichtring.

Die Öffnung der über die Dichtlippe 34 gebildeten Mulde ist in der dritten und vierten Ausführungsform einem Fahrzeuginnenraum zugewandt. Eintretende Feuchtigkeit wird jedoch über die Dichtlippe 34 verhindert, wobei sich ausgehend vom ringförmigen Dichtkörper 32 die elastische Dichtlippe 34 nach oben erstreckt.

Die in den Fig. 4 und 5 gezeigten dritten und vierten Ausführungsformen ermöglichen aufgrund der länglichen Ausbildung des Querschnitts der Dichtlippe 34 eine Kraftübertragung von dem zweiten Abschnitt 38 auf den ersten Abschnitt 36, ohne dass es zu einer starken Verformung im verbindenden Abschnitt der Dichtlippe 34 kommt, welcher dem ringförmigen Dichtkörper 32 gegenüberliegt.

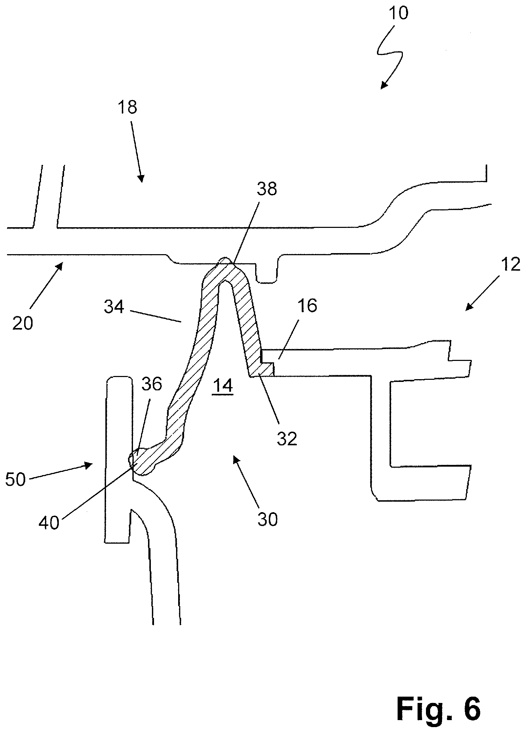

Fig. 6 zeigt eine schematische Schnittansicht durch eine Lademulde 10 einer fünften Ausführungsform. Die fünfte Ausführungsform unterscheidet sich von den vorhergehenden Ausführungsformen in der Ausrichtung der Dichtlippe 34 sowie der Position des Endabschnitts 40. Im Endabschnitt 40 befindet sich der erste Abschnitt 36, welcher an einer Wand eines Ladesteckverbinders 50 anliegt. Der zweite Abschnitt 38, welcher zur Anlage an der Tragstruktur 20 der Verschlussklappe 18 vorgesehen ist, weist eine ähnliche Ausbildung wie der zweite Abschnitt 38 der dritten und vierten Ausführungsform auf.

Anders als in den davor gezeigten Ausführungsformen ragen der erste Abschnitt 36 und der Endabschnitt 40 in die Mitte der Durchgangsöffnung 14. Wird ein Druck auf den zweiten Abschnitt 38 beim Schließen der Verschlussklappe 18 ausgeübt, so wird der Druck auf den Endabschnitt 40 und damit den ersten Abschnitt 36 ebenfalls erhöht. Hierzu weist die Dichtlippe 34 im Bereich zwischen dem zweiten Abschnitt 38 und dem Endabschnitt 40 eine Krümmung mit einem leichten Knick auf. Der Knick stellt sicher, dass beim Schließen der Verschlussklappe 18 die sichere Anlage über den ersten Abschnitt 36 aufrechterhalten wird.

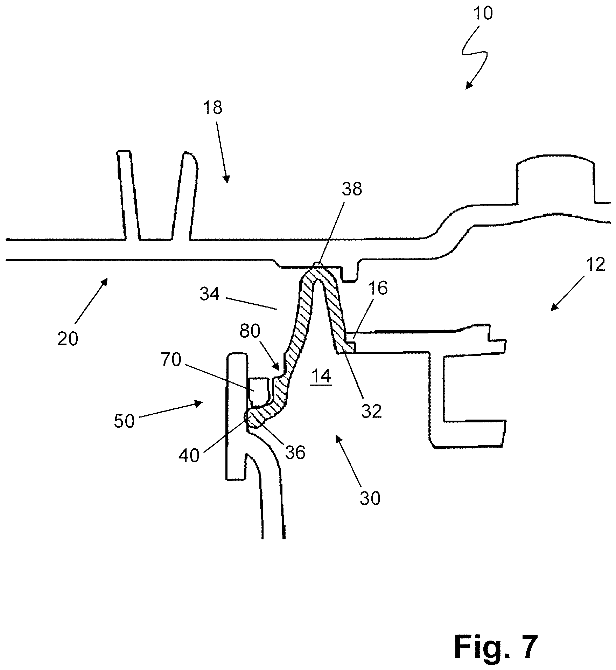

Fig. 7 zeigt eine schematische Schnittansicht durch eine Lademulde 10 einer sechsten Ausführungsform. Die sechste Ausführungsform unterscheidet sich von der fünften Ausführungsform durch die Einschnürung 80. Die Einschnürung 80 befindet sich über dem Knick, welcher bereits für die fünfte Ausführungsform beschrieben wurde. Über die Einschnürung 80 wird eine definierte Knickstelle bereitgestellt. Die definierte Knickstelle verhindert ein Einknicken der Dichtlippe 34 in anderen Bereichen, sodass die Dichtlippe 34 bzw. der gesamte Dichtring 30 nicht beschädigt oder zerstört werden. An der äußeren Wand des Ladesteckverbinders 50 liegt über dem Endabschnitt 40 bzw. dem ersten Abschnitt 36 ein Ring 70 an. Der Ring kann als Bestandteil des Ladesteckverbinders 50 oder als separates Teil ausgebildet sein. Der Ring 70 kann dazu dienen, die Bewegung der Dichtlippe 34 im Bereich auf Höhe des Ring 70 einzuschränken, sodass lediglich ein Einknicken im Bereich der Einschnürung 80 möglich ist.

Die in Fig. 7 gezeigte sechste Ausführungsform lässt sich aufgrund der Ausbildung der Krümmung einfach herstellen. Beispielsweise kann ein solcher Dichtring 30 in einem Spritzgussprozess hergestellt werden. Bei den davor beschriebenen Ausführungsformen weisen diese oftmals eine komplexe Querschnittsform auf, welche wiederum die Anforderungen an einen Spritzgussprozess erhöhen. Jedoch ermöglichen auch diese eine Abdichtung gegenüber einem Muldenkörper 12, einer Verschlussklappe 18 und einem Ladesteckverbinder 50 bzw. einem Tankeinfüllrohr, sodass über eine einzige Dichtlippe 34 eine sichere Abdichtung erreicht wird.

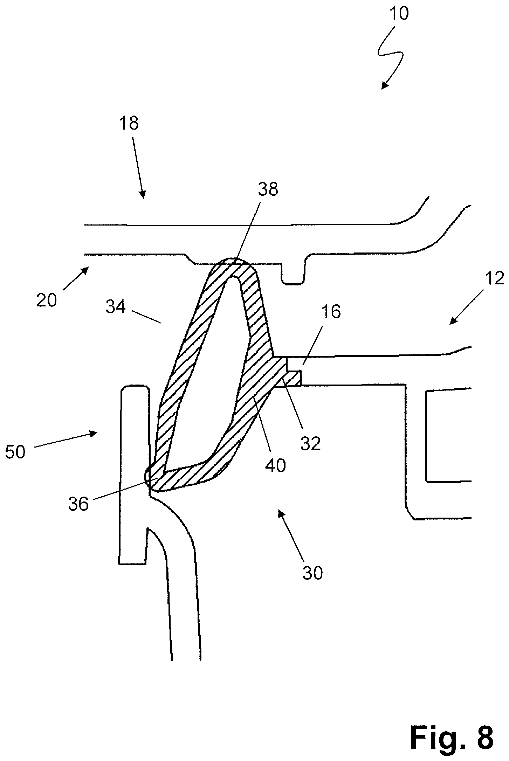

Fig. 8 zeigt eine schematische Schnittansicht durch eine Lademulde 10 einer siebten Ausführungsform. Die siebte Ausführungsform unterscheidet sich von den vorhergehenden Ausführungsformen dadurch, dass die Dichtlippe 34 eine geschlossene Querschnittsform aufweist. Der Endabschnitt 40 ist daher ebenfalls mit dem Dichtkörper 32 verbunden. Bei der siebten Ausführungsform kann der Innenraum des Dichtrings 30 mit einem Fluid gefüllt sein. Ein Fluid umfasst Flüssigkeiten und Gase. Ein Fluid kann einer Bewegung eine Kraft beim Verformen der Dichtlippe 34 entgegensetzen. Beispielsweise kann über einen mit Luft gefüllten Innenraum 39 auch eine Dämpfung zusätzlich zu einer elastischen Ausbildung des Dichtrings 30 bereitgestellt werden.

Die Dichtlippe 34 weist ebenfalls die gekrümmte Ausbildung auf und weist einen ersten Abschnitt 36 zur Anlage an einem Ladesteckverbinder 50 und einen zweiten Abschnitt 38 zur Anlage an einer Verschlussklappe 18 auf.

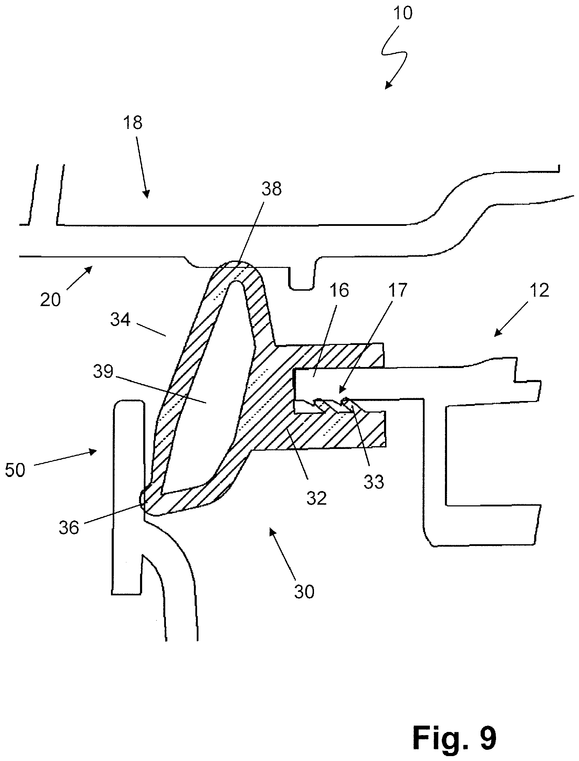

Fig. 9 zeigt eine schematische Schnittansicht durch eine Lademulde 10 einer achten Ausführungsform. Die achte Ausführungsform unterscheidet sich von der siebten Ausführungsform durch die Ausbildung des Dichtkörpers 32. Der Dichtkörper 32 weist Widerhaken 33 auf, die mit Haken 17 am Rand 16 der Tankmulde 12 zusammenwirken. Bei dieser Ausführungsform kann der Dichtring 32 auf den Rand 16 aufgeschoben werden, wobei hierüber eine Kederverbindung bereitgestellt wird. Die Widerhaken 33 und die Haken 17 stellen eine sichere Anlage und Befestigung am Rand 16 des Dichtrings 30 bereit.

Der Innenraum 39 des Dichtrings 30 kann wie für die siebte Ausführungsform bereits beschrieben mit einem Fluid gefüllt sein, wobei ein Fluid sowohl Gase als auch Flüssigkeiten umfasst.

Die achte Ausführungsform kann beispielsweise in einem Extrusionsverfahren hergestellt werden. Hierbei wird ein Dichtelement bereitgestellt, welches das gewünschte Profil, wie in Fig. 9 dargestellt, aufweist. Das Dichtelement wird anschließend abgelängt und die freien Enden des Dichtelements verbunden. Hierüber wird ein Dichtring 30 bereitgestellt, der anschließend über den Dichtkörper 32 auf einen Rand 36 aufgebracht werden kann. Die Verbindung der freien Enden kann mittels Verkleben oder Verschweißen erfolgen. Die Herstellung eines solchen Dichtrings 30 kann einfach erfolgen, da die Bereitstellung von Extrusionskörpern ohne Schwierigkeiten sich auch bei komplexen Querschnittsformen durchführen lässt. Das so gefertigte Teil muss nur noch abgelängt und verbunden werden, um einen Dichtring 30 bereitzustellen.

In allen in den Figuren gezeigten Ausführungsformen kann der Dichtring 30 über den ringförmigen Dichtkörper 32 entweder schwimmend am Rand 16 gelagert oder fest mit diesem verbunden sein. Eine feste Verbindung kann beispielsweise über Ultraschallschweißen, ein Verkleben, ein Zweikomponentenspritzgussverfahren oder ein Verklemmen erfolgen, wobei beispielsweise entweder der ringförmige Dichtkörper 32 den Rand 16 umgibt oder der Rand 16 eine Nut aufweist.

### Bezugszeichenliste

- 10: Lademulde
- 12: Muldenkörper
- 14: Durchgangsöffnung
- 16: Rand
- 17: Haken
- 18: Verschlussklappe
- 20: Tragstruktur
- 22: Außenseite
- 24: kegelstumpfartiger Abschnitt
- 26: Wand
- 30: Dichtring
- 32: Dichtkörper
- 33: Widerhaken
- 34: Dichtlippe
- 36: erster Abschnitt
- 38: zweiter Abschnitt
- 39: Innenraum
- 40: Endabschnitt
- 50: Ladesteckverbinder
- 60: Ring
- 70: Ring
- 80: Einschnürung

- E: Ebene

## Patentansprüche

1. Lade- oder Tankmulde zum Einsetzen in eine Karosserieöffnung eines Kraftfahrzeugs, mit einem Muldenkörper (12), der eine Durchgangsöffnung (14) aufweist, in die ein Ladesteckverbinder (50) oder ein Tankeinfüllrohr einsetzbar ist, einer Verschlussklappe (18) und einem an der Durchgangsöffnung (14) angeordneten Dichtring (30), wobei
- der Dichtring (30) einen ringförmigen Dichtkörper (32) aufweist,
- sich ausgehend vom ringförmigen Dichtkörper (32) eine elastische Dichtlippe (34) erstreckt,
- die Dichtlippe (34) eine Krümmung aufweist,
- ein erster Abschnitt (36) der Dichtlippe (34) im geöffneten und im geschlossenen Zustand der Verschlussklappe (18) an einem in die Durchgangsöffnung (14) eingesetzten Ladesteckverbinder (50) oder Tankeinfüllrohr anliegt, und
- ein zweiter Abschnitt (38) der Dichtlippe (34) an einer die Lade- oder Tankmulde verschließenden Verschlussklappe (18) im geschlossenen Zustand der Verschlussklappe (18) anliegt.

2. Lade- oder Tankmulde nach Anspruch 1, wobei die Dichtlippe (34) eine im Wesentlichen U-förmige, G-förmige, sichelförmige oder geschlossene Querschnittsform aufweist.

3. Lade- oder Tankmulde nach Anspruch 1 oder 2, wobei die Dichtlippe (34) derart ausgebildet ist, dass der erste Abschnitt (36) und der zweite Abschnitt (38) sich gegenüberliegen.

4. Lade- oder Tankmulde nach Anspruch 3, wobei die Erstreckung der Dichtlippe (34) zwischen dem ersten Abschnitt (36) und dem zweiten Abschnitt (38) größer ist als eine Erstreckung zwischen dem ringförmigen Dichtkörper (32) und einem den ringförmigen Dichtkörper (32) gegenüberliegenden, den ersten Abschnitt (36) und den zweiten Abschnitt (38) miteinander verbindenden Abschnitt der Dichtlippe (34).

5. Lade- oder Tankmulde nach einem der Ansprüche 1 bis 3, wobei sich die Dichtlippe (34) im Bereich unter oder über einer durch die Durchgangsöffnung (14) definierten Ebene (E) erstreckt und ein Endabschnitt (40) der Dichtlippe (34) entsprechend unterhalb oder oberhalb dieser Ebene (E) endet.

6. Lade- oder Tankmulde nach einem der Ansprüche 1 bis 5, wobei die Verschlussklappe (18) einen kegelstumpfartigen Abschnitt (24) aufweist und der zweite Abschnitt (38) der Dichtlippe (34) im verschlossenen Zustand der Verschlussklappe (18) an der Mantelfläche des kegelstumpfartigen Abschnitts (24) anliegt.

7. Lade- oder Tankmulde nach einem der Ansprüche 1 bis 6, wobei der ringförmige Dichtkörper (32) schwimmend in der Durchgangsöffnung (14) gelagert oder mit einem die Durchgangsöffnung (14) umgebenden Rand (16) verbunden ist.

8. Lade- oder Tankmulde nach einem der Ansprüche 1 bis 7, wobei der Dichtring (30) aus einem hitzebeständigen Kunststoff besteht.

9. Lade- oder Tankmulde nach einem der Ansprüche 1 bis 8, wobei die Dichtlippe (34) in mindestens einem Bereich mindestens eine Einschnürung (80) aufweist.

## Claims

1. Charging or fuel inlet compartment for insertion in a bodywork opening of a motor vehicle, with a compartment body (12) having a passage opening (14) into which a charging plug connector (50) or a fuel filler pipe is insertable, a closure flap (18) and a sealing ring (30) arranged at the passage opening, wherein
- the sealing ring (30) comprises an annular sealing body (32),
- a resilient sealing lip (34) extends out from the annular sealing body (32),
- the sealing lip (34) has a curvature,
- a first section (36) of the sealing lip (34) in the opened and closed state of the closure flap (18) bears against a charging plug connector (50) or fuel filler pipe inserted into the passage opening (14) and
- a second section (38) of the sealing lip (34) bears against a closure flap (18), which closes the charging or fuel inlet compartment, in the closed state of the closure flap (18).

2. Charging or fuel inlet compartment according to claim 1, wherein the sealing lip (34) has a substantially U-shaped, G-shaped, crescent-shaped or closed cross-sectional shape.

3. Charging or fuel inlet compartment according to claim 1 or 2, wherein the sealing lip (34) is formed in such a way that the first section (36) and the second section (38) are opposite one another.

4. Charging or fuel inlet compartment according to claim 3, wherein the dimension of the sealing lip (34) between the first section (36) and the second section (38) is greater than a dimension between the annular sealing body (32) and a section, which is opposite the annular sealing body (32) and which connects the first section (36) and the second section (38) together, of the sealing lip (34).

5. Charging or fuel inlet compartment according to any one of claims 1 to 3, wherein the sealing lip (34) extends in the region under or over a plane (E) defined by the passage opening (14) and an end section (40) of the sealing lip (34) correspondingly ends below or above this plane (E).

6. Charging or fuel inlet compartment according to any one of claims 1 to 5, wherein the closure flap (18) has a frusto-conical section (24) and the second section (38) of the sealing lip (34) in the closed state of the closure flap (18) bears against the circumferential surface of the frusto-conical section (24).

7. Charging or fuel inlet compartment according to any one of claims 1 to 6, wherein the annular sealing body (32) is mounted in the passage opening (14) to be floating or is connected with an edge (16) surrounding the passage opening (14).

8. Charging or fuel inlet compartment according to any one of claims 1 to 7, wherein the sealing ring (30) consists of a heat-resistant plastics material.

9. Charging or fuel inlet compartment according to any one of claims 1 to 8, wherein the sealing lip (34) has at least one constriction (80) in at least one region.

## Revendications

1. Berceau de chargement ou de réservoir pour l'insertion dans une ouverture de carrosserie d'un véhicule automobile, avec un corps de berceau (12) qui présente une ouverture débouchante (14), dans laquelle un connecteur enfichable de chargement (50) ou un tube de remplissage de réservoir peut être inséré, un clapet obturateur (18) et un anneau étanche (30) agencé au niveau de l'ouverture débouchante (14), dans lequel
- l'anneau étanche (30) présente un corps étanche annulaire (32),
- une lèvre étanche élastique (34) s'étend à partir du corps étanche annulaire (32),
- la lèvre étanche (34) présente une courbure,
- une première section (36) de la lèvre étanche (34) repose dans l'état ouvert et fermé du clapet obturateur (18) contre un connecteur enfichable de chargement (50) ou tube de remplissage de réservoir inséré dans l'ouverture débouchante (14), et
- une seconde section (38) de la lèvre étanche (34) repose contre un clapet obturateur (18) fermant le berceau de chargement ou de réservoir dans l'état fermé du clapet obturateur (18).

2. Berceau de chargement ou de réservoir selon la revendication 1, dans lequel la lèvre étanche (34) présente une forme de section transversale sensiblement en forme de U, en forme de G, en forme de croissant ou fermée.

3. Berceau de chargement ou de réservoir selon la revendication 1 ou 2, dans lequel la lèvre étanche (34) est réalisée de telle manière que la première section (36) et la seconde section (38) se fassent face.

4. Berceau de chargement ou de réservoir selon la revendication 3, dans lequel l'étendue de la lèvre étanche (34) entre la première section (36) et la seconde section (38) est supérieure à une étendue entre le corps étanche annulaire (32) et une section de la lèvre étanche (34) opposée au corps étanche annulaire (32), reliant la première section (36) et la seconde section (38) l'une à l'autre.

5. Berceau de chargement ou de réservoir selon l'une des revendications 1 à 3, dans lequel la lèvre étanche (34) s'étend dans la zone sous ou sur un plan (E) défini par l'ouverture débouchante (14) et une section d'extrémité (40) de la lèvre étanche (34) se termine en conséquence en dessous ou au-dessus de ce plan (E).

6. Berceau de chargement ou de réservoir selon l'une des revendications 1 à 5, dans lequel le clapet obturateur (18) présente une section (24) de type tronconique et la seconde section (38) de la lèvre étanche (34) repose dans l'état fermé du clapet obturateur (18) contre la surface enveloppante de la section (24) de type tronconique.

7. Berceau de chargement ou de réservoir selon l'une des revendications 1 à 6, dans lequel le corps étanche annulaire (32) est logé de manière flottante dans l'ouverture débouchante (14) ou est relié à un bord (16) entourant l'ouverture débouchante (14).

8. Berceau de chargement ou de réservoir selon l'une des revendications 1 à 7, dans lequel l'anneau étanche (30) se compose d'une matière plastique thermorésistante.

9. Berceau de chargement ou de réservoir selon l'une des revendications 1 à 8, dans lequel la lèvre étanche (34) présente dans au moins une zone au moins un étranglement (80).
